# EUROPÄISCHE PATENTSCHRIFT

(11) **EP 1 091 316 B1**
(45) Veröffentlichungstag und Bekanntmachung des Hinweises auf die Patenterteilung: **29.03.2006**
(21) Anmeldenummer: 99250349.0
(22) Anmeldetag: 02.10.1999
(51) Int. Cl.: G06K 19/077, G06K 19/04

(54) **Transponderanordnung für Arbeitsschutzprodukte**
Transponder device work safety products
Dispositif transpondeur pour des produits protecteurs de travail

(43) Veröffentlichungstag der Anmeldung: 11.04.2001
(73) Patentinhaber: AUERGESELLSCHAFT GMBH, 12059 Berlin (DE)
(72) Erfinder: Haeuser, Andreas, Dipl.-Ing., 12045 Berlin (DE)
(74) Vertreter: Wablat, Wolfgang

(56) Entgegenhaltungen:
- EP-A- 0 589 533
- EP-A- 0 754 406
- EP-A- 0 941 656
- WO-A-91/10982
- DE-A- 3 321 790
- GB-A- 2 215 933
- US-A- 4 870 700

## Beschreibung

Aus der Industrie und dem Konsumerbereich sind Kennzeichnungen zur Speicherung von Kenndaten von Produkten auf diesen und/oder auf deren Verpackungen bekannt. Diese werden meist in Form eines Strichcodes ausgeführt, für dessen Auswertung es handelsübliche Strichcode-Lesegeräte gibt.

Für Arbeitsschutzprodukte, die starken mechanischen, physikalischen und chemischen Beanspruchungen ausgesetzt sind eignet sich diese Kennzeichnung am Produkt nicht, so daß Karteikarten und PC Datenbanken für die einzelnen Produkte eingerichtet wurden, um Kenndaten festzuhalten. Zusätzlich war in solchen Fällen eine Kennzeichnung des Produktes, meist durch eine Farbkennzeichnung, die häufig erneuert werden mußte, erforderlich.

Aus WO91/10982 ist eine Transponderanordnung mit den im Oberbegriff des Anspruchs 1 aufgeführten Merkmalen bekannt.

Aufgabe der vorliegenden Erfindung war, eine Lösung zu schaffen, die für den lebenszyklus eines Arbeitsschutzproduktes eine Kennzeichnungsmöglichkeit bietet, deren Daten sicher, abrufbar und veränderbar, d.h. aktualisierbar sind.

Ziel der Erfindung war eine Lösung zu schaffen, die eine sichere und effektive Arbeit beim Datenabgriff und bei der Datenpflege im Rahmen notwendiger Wartungsarbeiten gewährleistet.

Es wurde eine Transponderanordnung entwickelt, bei der ein Transponder an dem Arbeitsschutzprodukt in einer Transponderhalterung befestigt wird. Als Transponder sind je nach Einsatzfall einfache Lesetransponder aber auch Lese- und Schreibtransponder einsetzbar.

Der Vorteil der erfindungsgemäßen Lösung gemäß Anspruch 1 besteht in der einfachen Erfassung und Pflege der Daten eines Arbeitsschutzproduktes durch Vorbeiführen des Transponders an einem Lesegerät. Die Datenpflege kann ausschließlich am PC erfolgen, dabei wird ein Lesetransponder eingesetzt der ausschließlich Kenndaten zur Identifizierung des Arbeitsschutzproduktes aus der Herstellung enthält. Sie kann aber auch über einen PC mit einem Lese- und Schreibtransponder derart erfolgen, daß aktualisierte Daten jeweils auf dem Transponder gespeichert werden, was den Vorteil hat, das an jedem beliebigen Ort mit einem Lesegerät über einen PC die Daten abrufbar und ergänzbar sind.

In der Ausführungsform Transponderanordnung mit Transponderhalterung sind auch bereits im Einsatz befindliche Arbeitsschutzprodukte nachträglich ausrüstbar.

Die erfindungsgemäße Transponderanordnung ist für die verschiedensten Arbeitsschutzprodukte einsetzbar, z.B. Atemschutzmasken, Atemschutz- und Fluchthauben, Schutzanzüge, Schutzhandschuhe, Atemschutzfilter, Produkte des unabhängigen Atemschutzes, Schutzhelme u.ä..

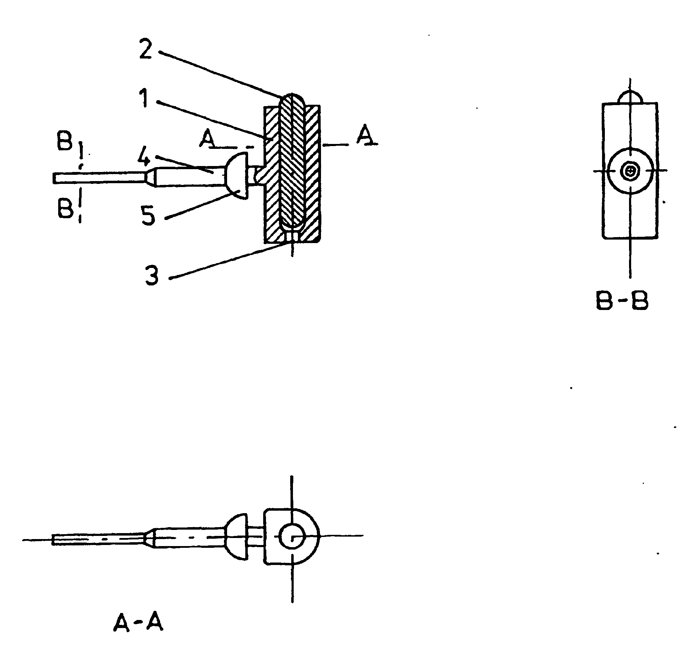

Die Erfindung soll nachfolgend an einem Ausführungsbeispiel, daß in der Abbildung dargestellt ist, näher erläutert werden. In die Abbildung wurde zur besseren Veranschaulichung die Schnittdarstellungen A - A und B - B aufgenommen.

Das Ausführungsbeispiel zeigt die erfindungsgemäße Transponderhalte rung die aus einem elastischen Plastikmaterial durch bekannte Fertigungsverfahren hergestellt wird. Die Transponderhalterung besteht aus einem behälterförmigen Aufnahmeteil (1) für den Transponder (2) mit einer kleinen Bohrung (3) am Boden des Aufnahmeteils (1), die ein leichtes Einführen des Transponder (2) gewährleistet. Das Aufnahmeteil (1) ist mit einem Befestigungsbauteil (4) versehen, in der Ausführungsform ein stiftförmiges Bauteil, an dem eine Haltewulst (5) angeordnet ist. Durch eine Bohrung im Arbeitsschutzprodukt wird die Transponderhalterung mit dem stiftförmigen Befestigungsbauteil (4) eingefädelt und fest eingezogen, bis die Haltewulst (5) von Innen einschnappt, wodurch eine sicherer Halt gewährleistet wird. Die Transponderhalterung ist bei jedem der aufgeführten Arbeitsschutzprodukt einsetzbar. Sie kann während der Herstellung der Produkte eingearbeitet werden oder bei vorhandenen Produkten nachgerüstet werden.

### Aufstellung der Bezugszeichen

- 1: Aufnahmeteil
- 2: Transponder
- 3: Bohrung
- 4: Befestigungsbauteil
- 5: Haltewulst

## Patentansprüche

1. Transponderanordnung für Arbeitsschutzprodukte mit einem behälterförmigen Aufnahmeteil (1) für den Transponder (2), wobei am Aufnahmeteil (1) eine Haltewulst (5) an einem stiftförmigen Befestigungsteil (4) angeordnet ist, **dadurch gekennzeichnet, dass**
- die das Aufnahmeteil (1) und das stiftförmige Befestigungsteil (4) mit Haltewulst (5) umfassende Transponderhalterung aus einem elastischen Plastikmaterial besteht; und
- das stiftförmige Befestigungsteil (4) mit der Haltewulst (5) so ausgestaltet ist, dass es durch eine entsprechende Bohrung in dem Arbeitsschutzprodukt gefädelt und eingezogen werden kann, bis die Haltewulst von innen einschnappt.

2. Transponderanordnung nach Anspruch 1, **dadurch gekennzeichnet, dass** das Aufnahmeteil (1) im Boden eine kleine Bohrung (3) zum leichten Einführen des Transponders (2) aufweist.

## Claims

1. A transponder arrangement for occupational safety products with a container-shaped receptacle (1) for the transponder (2), said receptacle (1) comprising a holding bulge (5) on a pin-shaped fastening part (4), **characterized in that**
- the holder of the transponder that includes the receptacle (1) and the pin-shaped fastening part (4) with holding bulge (5) consists of a plastic material; and
- the pin-shaped fastening part(4) with the holding bulge (5) is designed so that it can be threaded through a respective hole in the occupational safety product and pulled together until the holding bulge snaps into place from inside.

2. The transponder arrangement according to claim 1, **characterized in that** the receptacle (1) comprises a small hole (3) in its bottom for easy insertion of the transponder (2).

## Revendications

1. Agencement de transporteur pour des produits de protection de travail, comportant une partie de réception (1) en forme de récipient pour le transpondeur (2), dans lequel un bourrelet de retenue (5) est agencé sur la partie de réception (1) au niveau d'une partie de fixation (4) en forme de goupille, **caractérisé en ce que**
- la monture de transpondeur comprenant la partie de réception (1) et la partie de fixation (4) en forme de goupille avec le bourrelet de retenue (5) sont en une matière plastique élastique ; et
- la partie de fixation (4) en forme de goupille avec le bourrelet de retenue (5) est réalisée de telle sorte qu'elle peut être enfilée et rentrée à travers un perçage correspondant dans le produit de protection de travail jusqu'à ce que le bourrelet de retenue s'encliquette depuis l'intérieur.

2. Agencement de transpondeur selon la revendication 1, **caractérisé en ce que** la partie de réception (1) présente dans le fond un petit perçage (3) pour faciliter l'introduction du transpondeur (2).
